# EUROPEAN PATENT APPLICATION

(11) **EP 4 212 888 A1**
(43) Date of publication of application: **19.07.2023**
(21) Application number: 22211376.3
(22) Date of filing: 05.12.2022
(51) Int. Cl.: G01R 19/165, G05F 1/10, G11C 5/14

(54) **GLITCH DETECTOR WITH HIGH RELIABILITY**

(30) Priority: 14.01.2022 US 202263299424 P; 18.11.2022 US 202217989696
(71) Applicant: MediaTek Inc., Hsin-Chu 300 (TW)
(72) Inventor: WANG, Tze-Chien, 30078 Hsinchu City (TW)
(74) Representative: Haseltine Lake Kempner LLP

(57) **Abstract**

The present invention provides a glitch detector including a first inverter, a second inverter, a first capacitor and a second capacitor. The first inverter is connected between a supply voltage and a ground voltage, and is configured to receive a first signal at a first node to generate a second signal to a second node. The second inverter is connected between the supply voltage and the ground voltage, and is configured to receive the second signal at the second node to generate the first signal to the first node. A first electrode of the first capacitor is coupled to the supply voltage, and a second electrode of the first capacitor is coupled to the first node. A first electrode of the second capacitor is coupled to the ground voltage, and a second electrode of the second capacitor is coupled to the second node. Additionally, the present invention also provides a glitch detector comprising current paths, to ground and to the power supply, coupled to the output of the inverters.

## Description

This application claims the benefit of U.S. Provisional Application No. 63/299,424, filed on January 14th, 2022. The content of the application is incorporated herein by reference.

### Background

Hackers may inject power glitches to a chip to interrupt it operation, so as to implant malware to get control of the chip. In order to prevent the chip from being damaged by the above fault injections such as the power glitch, one or more glitch detectors are designed within the chip to detect if the chip suffers the power glitch, and if the power glitch is detected, the chip can take appropriate action to avoid being implanted with malware. However, the conventional glitch detector such as a latch-type glitch detector cannot accurately detect short glitches, and may not always output a warning signal when a power glitch occurs.

### Summary

It is therefore an objective of the present invention to provide a glitch detector, which is capable of detecting shorter glitches and/or not missing any meaningful power glitch, to solve the above-mentioned problems.

According to one embodiment of the present invention, a glitch detector comprising a first inverter, a second inverter, a first capacitor and a second capacitor is disclosed. The first inverter is connected between a supply voltage and a ground voltage, and is configured to receive a first signal at a first node to generate a second signal to a second node. The second inverter is connected between the supply voltage and the ground voltage, and is configured to receive the second signal at the second node to generate the first signal to the first node. A first electrode of the first capacitor is coupled to the supply voltage, and a second electrode of the first capacitor is coupled to the first node. A first electrode of the second capacitor is coupled to the ground voltage, and a second electrode of the second capacitor is coupled to the second node.

According to one embodiment of the present invention, a glitch detector comprising a first inverter, a second inverter, at least one first discharging path and at least one second discharging path is disclosed. The first inverter is connected between a supply voltage and a ground voltage, and is configured to receive a first signal at a first node to generate a second signal to a second node. The second inverter is connected between the supply voltage and the ground voltage, and is configured to receive the second signal at the second node to generate the first signal to the first node. The at least one first discharging path is coupled to the first node, and is configured to discharge charges of the first node. The at least one second discharging path is coupled to the first node, and is configured to discharge charges of the second node.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating a glitch detector according to one embodiment of the present invention.
FIG. 2 shows that the discharging paths of the glitch detector shorten the reset time when the under-voltage glitch occurs.
FIG. 3 is a diagram illustrating a glitch detector according to one embodiment of the present invention.
FIG. 4 shows that the capacitors pull high the signal Vm and pull down the signal Vmb after the under-voltage glitch according to one embodiment of the present invention.
FIG. 5 is a diagram illustrating a glitch detector according to one embodiment of the present invention.

### Detailed Description

Certain terms are used throughout the following description and claims to refer to particular system components. As one skilled in the art will appreciate, manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ...". The terms "couple" and "couples" are intended to mean either an indirect or a direct electrical connection. Thus, if a first device couples to a second device, that connection may be through a direct electrical connection, or through an indirect electrical connection via other devices and connections.

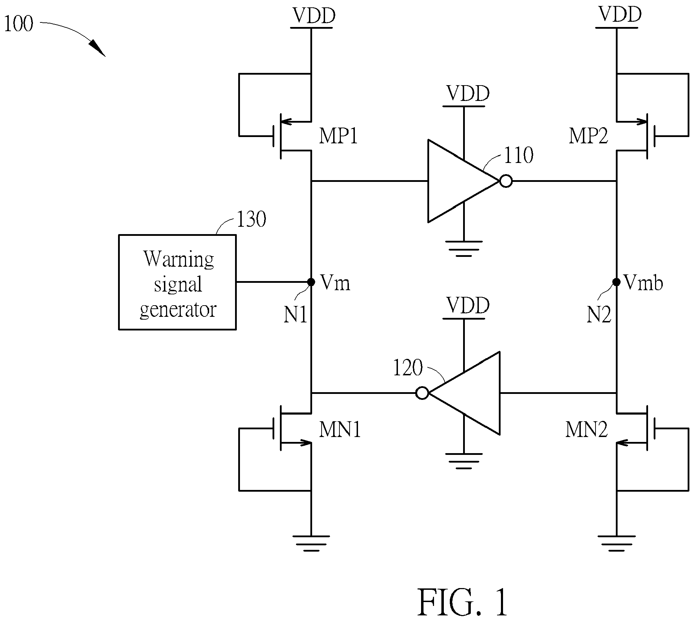

FIG. 1 is a diagram illustrating a glitch detector 100 according to one embodiment of the present invention. As shown in FIG. 1, the glitch detector 100 comprises two logical circuits connected in a latch type, wherein the two logical circuits are inverters 110 and 120 in this embodiment. Each of the inverter 110 and the inverter 120 can be implemented by using a P-type transistor and an N-type transistor connected between a supply voltage VDD and a ground voltage, the inverter 110 is configured to receive a signal Vm at a node N1 to generate a signal Vmb at a node N2, and the inverter 120 is configured to receive the signal Vmb at the node N2 to generate the signal Vm at the node N1. In addition, the glitch detector 100 further comprises four discharging paths, and the discharging paths are implemented by using diode-connected P-type transistors MP1, MP2, and diode-connected N-type transistors MN1 and MN2, wherein the P-type transistor MP1 is configured to selectively provide a current path between the supply voltage and the node N1, the P-type transistor MP2 is configured to selectively provide a current path between the supply voltage and the node N2, the N-type transistor MN1 is configured to selectively provide a current path between the node N1 and the ground voltage, and the N-type transistor MN2 is configured to selectively provide a current path between the node N2 and the ground voltage.

The glitch detector 100 is used to detect under-voltage glitches according to a voltage level of the signal Vm or the signal Vmb. Specifically, the signal Vm is controlled to have a low voltage level (i.e., logical value "0") while the signal Vmb is controlled to have a high voltage level (i.e., logical value "1") when the supply voltage VDD has a normal voltage level. Then, when the glitch detector 100 suffers the under-voltage glitch, the voltage level of the signal Vmb will drop. Finally, when the supply voltage VDD returns to the original voltage level, the signal Vm has a certain probability (e.g., 50%) to have the high voltage level. Therefore, once the signal Vm has the high voltage level, the glitch detector 100 can determine that the chip suffers the under-voltage glitch and trigger a warning signal generator 130 to notify a processing circuit that the supply voltage VDD suffers the under-voltage glitch, for the processing circuit to take some appropriate actions. After the warning signal generator 130 notifies the processing circuit, a reset circuit (not shown) can control the signals Vm and Vmb to have the low voltage level and the high voltage level, respectively, for determining a next under-voltage glitch.

In another embodiment, the warning signal generator 130 can be connected to the node N2, and after the signal Vmb becomes the logical value "0", the warning signal generator 130 is triggered to output the warning signal. This alternative design shall fall within the scope of the present invention.

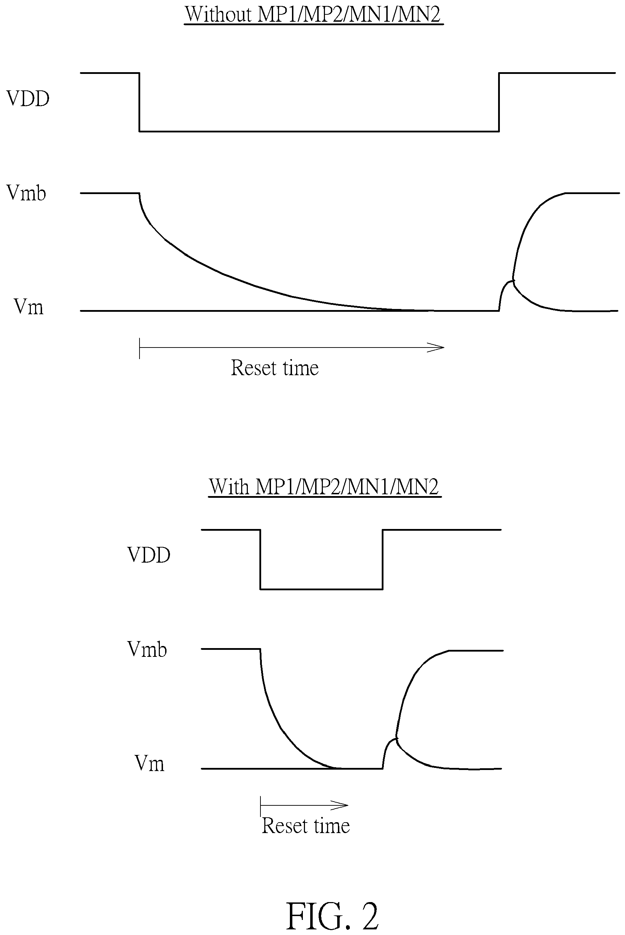

As described in the background of the invention, the conventional glitch detector cannot detect short glitches. To solve this problem, the P-type transistors MP1, MP2, and the N-type transistors MN1 and MN2 are used in the glitch detector 100 to reduce the reset time in response to the under-voltage glitch, so that the glitch detector 100 can detect short glitches. Specifically, referring to FIG. 2, if the glitch detector 100 does not have the P-type transistors MP1, MP2, and the N-type transistors MN1 and MN2, the glitch detector 100 needs longer reset time to make the voltage level of the signal Vmb close to the voltage level of the signal Vm (assuming that the supply voltage VDD drops to the ground voltage) when the supply voltage VDD suffers the under-voltage glitch, then the signal Vm is able to have the high voltage level when the supply voltage VDD returns to the original voltage level. On the other hand, if the glitch detector 100 has the P-type transistors MP1, MP2, and the N-type transistors MN1 and MN2 for discharging the charges of the nodes N1 and N2 when the supply voltage VDD suffers the under-voltage glitch, it only takes a short reset time to make the voltage level of the signal Vmb close to the voltage level of the signal Vm. Therefore, the glitch detector 100 can detect short glitches.

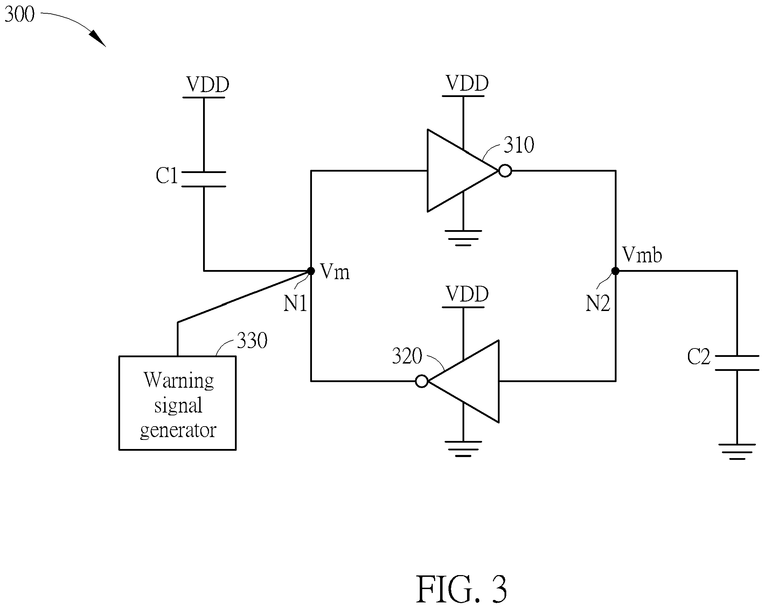

FIG. 3 is a diagram illustrating a glitch detector 300 according to one embodiment of the present invention. As shown in FIG. 3, the glitch detector 300 comprises two logical circuits connected in a latch type, wherein the two logical circuits are inverters 310 and 320 in this embodiment. Each of the inverter 310 and the inverter 320 can be implemented by using a P-type transistor and an N-type transistor connected between a supply voltage VDD and a ground voltage, the inverter 310 is configured to receive a signal Vm at a node N1 to generate a signal Vmb at a node N2, and the inverter 320 is configured to receive the signal Vmb at the node N2 to generate the signal Vm at the node N1. In addition, the glitch detector 300 further comprises capacitors C1 and C2. The capacitor C1 is coupled between the supply voltage VDD and the node N1, that is one electrode of the capacitor C1 is coupled to the supply voltage VDD and the other electrode of the capacitor C1 is coupled to the node N1; and the capacitor C2 is coupled between the node N2 and the ground voltage, that is one electrode of the capacitor C2 is coupled to the ground voltage and the other electrode of the capacitor C2 is coupled to the node N2, wherein the capacitors C1 and C2 are intentionally positioned in the glitch detector 300, that is the capacitors C1 and C2 are not parasitic capacitance.

The glitch detector 300 is used to detect under-voltage glitch according to a voltage level of the signal Vm or the signal Vmb. Specifically, the signal Vm is controlled to have a low voltage level (i.e., logical value "0") while the signal Vmb is controlled to have a high voltage level (i.e., logical value "1") when the supply voltage VDD has a normal voltage level. Then, when the glitch detector 300 suffers the under-voltage glitch, the signal Vmb will drop to a voltage level close to the supply voltage VDD. Finally, when the supply voltage VDD returns to the original voltage level, the signal Vm will have the high voltage level while the signal Vmb has the low voltage level. Therefore, once the signal Vm has the high voltage level, the glitch detector 300 can determine that the chip suffers the under-voltage glitch and trigger a warning signal generator 330 to notify a processing circuit that the supply voltage VDD suffers the under-voltage glitch. After the warning signal generator 330 notifies the processing circuit, a reset circuit (not shown) can control the signals Vm and Vmb to have the low voltage level and the high voltage level, respectively, for determining a next under-voltage glitch.

In another embodiment, the warning signal generator 330 can be connected to the node N2, and after the signal Vmb becomes the logical value "0", the warning signal generator 330 is triggered to output the warning signal. This alternative design shall fall within the scope of the present invention.

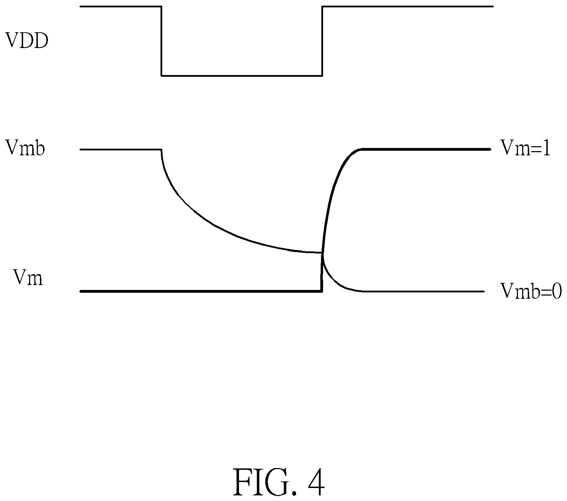

As described in the background of the invention, the conventional glitch detector may not always output a warning signal when a power glitch occurs, that is the signal Vm may still have the low-voltage level after the under-voltage glitch. To solve this problem, the capacitors C1 and C2 are used to make sure that the signal Vm always has the high voltage level after the under-voltage glitch, as long as the under-voltage glitch crosses a threshold voltage of the inverter 310/320 (i.e., the under-voltage glitch can change the logical value outputted by the inverter). Specifically, referring to FIG. 4, initially the supply voltage VDD has a normal level, the signal Vm has the low voltage level and the signal Vm has the low voltage level, the signal Vmb has the high voltage level, and at this time, the cross voltage of each of the capacitors C1 and C2 is about VDD. When the supply voltage VDD suffers the under-voltage glitch, for example, the supply voltage drops to (1/3) *VDD, the voltage level of the signal Vbm is also reduced to (1/3)*VDD due to the P-type transistor within the inverter 310. At this time, the cross voltage of each of the capacitors C1 and C2 is about (1/3)*VDD. Then, when the supply voltage VDD returns to the original voltage level, the capacitor C1 pulls high the signal Vm so that the voltage level of the signal Vm is about (2/3)*VDD, and at this time, the voltage level of the signal Vmb is still (1/3)*VDD. In addition, because the voltage level of the signal Vm is higher than the voltage level of the signal Vmb, and the inverters 310 and 320 form a positive feedback loop, the signal Vm will be pulled high while the signal Vmb will be pulled down when the supply voltage VDD_V returns to the original voltage level. That is, after the under voltage glitch disappears, the signal Vm is equal to the logical value "1", and the signal Vmb is equal to the logical value "0".

In light of the embodiment shown in FIG. 3 and FIG. 4, when the supply voltage VDD suffers a meaningful under-voltage glitch, the signal Vm will always have the high-voltage level to trigger the warning signal generator 330 to notify the processing circuit, so that the glitch detector 300 will not miss any meaningful under-voltage glitch to improve the reliability.

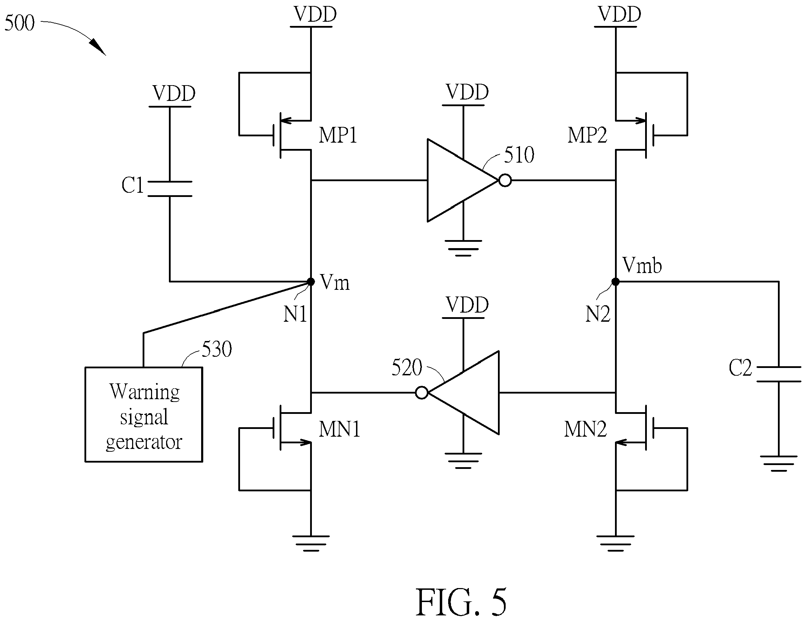

In an alternative embodiment, the glitch detector 100 shown in FIG. 1 and the glitch detector 300 shown in FIG. 3 can be combined so that the glitch detector is capable of detecting shorter glitches and not missing any meaningful power glitch. That is, the glitch detector 100 can be modified to add the capacitors C1 and C2 shown in FIG. 3, or the glitch detector 300 can be modified to add the transistors MP1, MP2, MN1 and MN2 shown in FIG. 1. FIG. 5 is a diagram illustrating a glitch detector 500 according to one embodiment of the present invention. As shown in FIG. 5, the glitch detector 500 comprises two logical circuits connected in a latch type, wherein the two logical circuits are inverters 510 and 520 in this embodiment. Each of the inverter 510 and the inverter 520 can be implemented by using a P-type transistor and an N-type transistor connected between a supply voltage VDD and a ground voltage, the inverter 510 is configured to receive a signal Vm at a node N1 to generate a signal Vmb at a node N2, and the inverter 520 is configured to receive the signal Vmb at the node N2 to generate the signal Vm at the node N1. In addition, the glitch detector 500 further comprises four discharging paths, and the discharging paths are implemented by using P-type transistors MP1, MP2, and N-type transistors MN1 and MN2, wherein the P-type transistor MP1 is configured to selectively provide a current path between the supply voltage and the node N1, the P-type transistor MP2 is configured to selectively provide a current path between the supply voltage and the node N2, the N-type transistor MN1 is configured to selectively provide a current path between the node N1 and the ground voltage, and the N-type transistor MN2 is configured to selectively provide a current path between the node N2 and the ground voltage. The glitch detector 500 further comprises capacitors C1 and C2. The capacitor C1 is coupled between the supply voltage VDD and the node N1, and the capacitor C2 is coupled between the node N2 and the ground voltage, wherein the capacitors C1 and C2 are intentionally positioned in the glitch detector 500, that is the capacitors C1 and C2 are not parasitic capacitance. The glitch detector 500 further comprises a warning signal generator 530, wherein the warning signal generator 530 will output a warning signal when the signal Vm is from a low voltage level to a high voltage level.

In this embodiment, the P-type transistors MP1, MP2, and N-type transistors MN1 and MN2 are used to discharge charges of the nodes N1 and N2 when the under-voltage glitch occurs, and the capacitors C1 and C2 are used to pull high the signal Vm and pull down the signal Vmb when the under-voltage glitch disappears. Therefore, the glitch detector 500 can detect short glitches and does not miss any meaningful under-voltage glitch.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A glitch detector (100, 300, 500), comprising:
a first inverter (110, 120, 310, 320, 510, 520) connected between a supply voltage and a ground voltage, configured to receive a first signal at a first node to generate a second signal to a second node;
a second inverter (110, 120, 310, 320, 510, 520) connected between the supply voltage and the ground voltage, configured to receive the second signal at the second node to generate the first signal to the first node;
a first capacitor (C1), wherein a first electrode of the first capacitor (C1) is coupled to the supply voltage, and a second electrode of the first capacitor (C1) is coupled to the first node; and
a second capacitor (C2), wherein a first electrode of the second capacitor (C2) is coupled to the ground voltage, and a second electrode of the second capacitor (C2) is coupled to the second node.

2. The glitch detector (100, 300, 500) of claim 1, further comprising:
a warning signal generator (130, 330, 530), coupled to the first node or the second node, configured to determine whether the supply voltage suffers an under-voltage glitch according to a voltage level of the first signal or a voltage level of the second signal, to determine whether to output a warning signal.

3. The glitch detector (100, 300, 500) of claim 2, wherein when the supply voltage does not suffer an under-voltage glitch, the first signal has a first logical value, the second signal has a second logical value different from the first logical value; and after the supply voltage suffers the under-voltage glitch, the warning signal generator (130, 330, 530) determines that the supply voltage suffers the under-voltage glitch by detecting if the first signal changes to the second logical value, or by detecting if the second signal changes to the first logical value.

4. The glitch detector (100, 300, 500) of claim 1, further comprising:
at least one first discharging path coupled to the first node, configured to discharge charges of the first node; and
at least one second discharging path coupled to the first node, configured to discharge charges of the second node.

5. The glitch detector (100, 300, 500) of claim 4, wherein the at least one first discharging path discharges the charges of the first node, and the at least one second discharging path discharges the charges of the second node when the supply voltage suffers an under-voltage glitch.

6. The glitch detector (100, 300, 500) of claim 4, wherein the at least one first discharging path comprises a first P-type transistor and a first N-type transistor, the first P-type transistor is configured to selectively provide a current path between the supply voltage and the first node, and the first N-type transistor is configured to selectively provide a current path between the ground voltage and the first node.

7. The glitch detector (100, 300, 500) of claim 6, wherein the at least one second discharging path comprises a second P-type transistor and a second N-type transistor, the second P-type transistor is configured to selectively provide a current path between the supply voltage and the second node, and the second N-type transistor is configured to selectively provide a current path between the ground voltage and the second node.

8. The glitch detector (100, 300, 500) of claim 7, wherein each of the first P-type transistor, the first N-type transistor, the second P-type transistor and the second N-type transistor is a diode-connected transistor.

9. A glitch detector (100, 300, 500), comprising:
a first inverter (110, 120, 310, 320, 510, 520) connected between a supply voltage and a ground voltage, configured to receive a first signal at a first node to generate a second signal to a second node;
a second inverter (110, 120, 310, 320, 510, 520) connected between the supply voltage and the ground voltage, configured to receive the second signal at the second node to generate the first signal to the first node;
at least one first discharging path coupled to the first node, configured to discharge charges of the first node; and
at least one second discharging path coupled to the first node, configured to discharge charges of the second node.

10. The glitch detector (100, 300, 500) of claim 6, further comprising:
a warning signal generator (130, 330, 530), coupled to the first node or the second node, configured to determine whether the supply voltage suffers an under-voltage glitch according to a voltage level of the first signal or a voltage level of the second signal, to determine whether to output a warning signal.

11. The glitch detector (100, 300, 500) of claim 10, wherein when the supply voltage does not suffer an under-voltage glitch, the first signal has a first logical value, the second signal has a second logical value different from the first logical value; and after the supply voltage suffers the under-voltage glitch, the warning signal generator (130, 330, 530) determines that the supply voltage suffers the under-voltage glitch by detecting if the first signal changes to the second logical value, or by detecting if the second signal changes to the first logical value.

12. The glitch detector (100, 300, 500) of claim 9, wherein the at least one first discharging path discharges the charges of the first node, and the at least one second discharging path discharges the charges of the second node when the supply voltage suffers an under-voltage glitch.

13. The glitch detector (100, 300, 500) of claim 9, wherein the at least one first discharging path comprises a first P-type transistor and a first N-type transistor, the first P-type transistor is configured to selectively provide a current path between the supply voltage and the first node, and the first N-type transistor is configured to selectively provide a current path between the ground voltage and the first node.

14. The glitch detector (100, 300, 500) of claim 13, wherein the at least one second discharging path comprises a second P-type transistor and a second N-type transistor, the second P-type transistor is configured to selectively provide a current path between the supply voltage and the second node, and the second N-type transistor is configured to selectively provide a current path between the ground voltage and the second node.

15. The glitch detector (100, 300, 500) of claim 14, wherein each of the first P-type transistor, the first N-type transistor, the second P-type transistor and the second N-type transistor is a diode-connected transistor.
